# FASCICULE DE BREVET EUROPEEN

(11) **EP 1 255 064 B1**
(45) Date de publication et mention de la délivrance du brevet: **25.05.2005**
(21) Numéro de dépôt: 02291029.3
(22) Date de dépôt: 23.04.2002
(51) Int. Cl.: F16H 59/02

(54) **Dispositif de commande pour boîte de vitesses automatique de véhicule automobile**
Schaltvorrichtung für das Automatikgetriebe eines Fahrzeugs
Shifting device for an automatic vehicle transmission

(30) Priorité: 23.04.2001 FR 0105434
(43) Date de publication de la demande: 06.11.2002
(73) Titulaire: VALEO ELECTRONIQUE, 94000 Creteil (FR)
(72) Inventeur: Mange, Jean-Christophe, 94410 Saint Maurice (FR)
(74) Mandataire: de la Bigne, Guillaume Michel Marie

(56) Documents cités:
- EP-A- 0 620 385
- EP-A- 0 939 008
- EP-A- 0 939 009
- EP-A- 1 061 290
- EP-A- 1 076 193
- US-A- 5 450 054
- US-A- 5 660 080
- US-A- 6 151 977

## Description

La présente invention concerne un dispositif de commande pour boîte de vitesses automatique de véhicule automobile.

Habituellement, un dispositif de commande pour boîte de vitesses automatique de véhicule automobile comprend un sélecteur, articulé sur un support principal, et des premiers et seconds moyens de guidage de ce sélecteur selon, respectivement, un premier mouvement de sélection de configuration de fonctionnement de la boîte de vitesses et un second mouvement de changement de rapport.

En général, le déplacement du sélecteur selon son premier mouvement de sélection permet de positionner ce sélecteur dans les configurations suivantes de fonctionnement de la boîte de vitesses :
- position « P » : véhicule en stationnement ;
- position « R » : marche arrière ;
- position « N » : point mort ;
- position « D » : roulage en marche avant.

Par ailleurs, le déplacement du sélecteur selon son second mouvement de changement de rapport permet de positionner ce sélecteur dans trois positions, respectivement, de «repos», de «passage à un rapport supérieur» et de «passage à un rapport inférieur».

Dans le cas d'un sélecteur articulé sur le plancher du véhicule, les premiers et seconds moyens de guidage de ce sélecteur comprennent une grille, à travers laquelle s'étend le sélecteur, munie d'une première fente longitudinale, pour le guidage du sélecteur selon son premier mouvement de sélection, et d'une seconde fente transversale, pour le guidage du sélecteur selon son second mouvement de changement de rapport. Les première et seconde fentes se croisent à la position « D » de manière à n'autoriser le second mouvement du sélecteur que lorsque que ce dernier est positionné longitudinalement dans la configuration de roulage en marche avant (position « D »).

EP-A-1 076 193 décrit un dispositif de commande pour boîte de vitesses automatique de véhicule automobile, du type comprenant :
- un sélecteur, articulé sur un support principal,
- des premiers moyens de guidage du sélecteur selon un premier mouvement de rotation du sélecteur autour d'un axe géométrique de rotation, pour la sélection d'une configuration de fonctionnement de la boîte de vitesses, les premiers moyens de guidage comprenant un arbre de rotation monté rotatif dans un logement, ménagé dans la bascule, formant un palier mobile matérialisant une liaison de type pivot d'axe de rotation, cet arbre étant muni d'une extrémité proximale solidaire du sélecteur,
- des seconds moyens de guidage du sélecteur selon un second mouvement de basculement du sélecteur autour d'un axe géométrique de basculement, sensiblement perpendiculaire à l'axe de rotation, pour le changement de rapport.

L'invention a pour but de proposer un dispositif de commande pour boîte de vitesses automatique, du type dans lequel le sélecteur est susceptible d'être déplacé selon deux mouvements distincts, ce dispositif étant peu encombrant et adapté pour être agencé sur un corps de colonne de direction, à proximité du volant.

A cet effet, l'invention a pour objet un dispositif de commande du type précité, **caractérisé en ce que** la bascule est commune aux premiers et seconds moyens de guidage et est reliée au support principal par une liaison de type pivot matérialisant l'axe de basculement, l'arbre de rotation étant muni d'une extrémité distale portant des moyens de rappel élastique de la bascule autour de l'axe de basculement vers une position de repos du sélecteur.

Suivant d'autres caractéristiques de ce dispositif de commande :
- les seconds moyens de guidage comprennent des tourillons, solidaires de la bascule, portés par des flasques, solidaires du support principal, formant des paliers fixes matérialisant l'axe de basculement;
- le dispositif comprend des premiers et seconds moyens de commutation électrique actionnés par les déplacements du sélecteur selon ses premier et second mouvements, respectivement, les premiers moyens de commutation électrique étant susceptibles d'adopter différents états correspondant à différentes configurations de fonctionnement de la boîte de vitesses, les seconds moyens de commutation électrique étant susceptibles d'adopter trois états correspondant à trois positions du sélecteur à savoir, la position de repos et deux autres positions respectivement de passage à un rapport supérieur et de passage à un rapport inférieur;
- les premiers et seconds moyens de commutation électrique comprennent des moyens complémentaires liés à :
   o une extrémité distale de la bascule,
   o une extrémité distale de l'arbre de rotation faisant saillie à travers l'extrémité distale de la bascule, et
   o un support secondaire, porté par le support principal, traversé par l'arbre de rotation, intercalé axialement entre l'extrémité distale de l'arbre de rotation et l'extrémité distale de la bascule;
- le support secondaire est un circuit imprimé, les premiers moyens de commutation électrique comprenant au moins un capteur, de préférence à effet Hall, porté par une face distale de ce circuit imprimé, et des moyens d'influence du capteur, comportant de préférence au moins un aimant, portés par l'extrémité distale de l'arbre de rotation;
- les seconds moyens de commutation électrique comprennent au moins un contacteur à poussoir porté par une face proximale du circuit imprimé, et un organe d'actionnement du poussoir porté par l'extrémité distale de la bascule;
- le dispositif comprend des moyens d'indexation de la position du sélecteur autour de l'axe de rotation;
- les moyens d'indexation comprennent une bague, montée coulissante axialement sur l'arbre de rotation, munie d'au moins un ergot axial destiné à coopérer avec au moins une portion de couronne crantée solidaire de la bascule, la bague étant rappelée élastiquement vers la portion de couronne crantée;
- le dispositif comprend des moyens libérables de verrouillage du sélecteur interdisant le passage entre au moins deux états des premiers moyens de commutation électrique;
- les moyens de verrouillage du sélecteur comprennent un doigt, formant un pêne escamotable, destiné à coopérer avec une gâche, solidaire de la bascule;
- la gâche comprend un profil évolutif, destiné à coopérer avec le pêne, délimité par des butées d'immobilisation de ce pêne et des rampes d'escamotage de ce pêne;
- le pêne est solidaire d'un bouton de libération des moyens de verrouillage porté par le sélecteur, ce bouton étant déplaçable entre une position de verrouillage, vers laquelle il est sollicité élastiquement, et une position de déverrouillage;
- les moyens de rappel élastique du sélecteur sollicitent ce sélecteur de sa position de passage à un rapport supérieur ou inférieur vers sa position de repos ;
- les moyens de rappel élastique comprennent un galet, porté par l'extrémité distale de l'arbre de rotation, sollicité élastiquement contre une piste de rappel, solidaire du support principal, délimitée par deux rampes opposées disposées en « V » ;
- le galet est porté par une chape montée coulissante axialement sur une extrémité de l'arbre de rotation.

L'invention sera mieux comprise à la lecture de la description qui va suivre, donnée uniquement à titre d'exemple et faite en se référant aux dessins dans lesquels :
- la figure 1 est une vue en élévation d'un dispositif de commande selon l'invention, agencé à proximité d'un volant du véhicule ;
- la figure 2 est une vue en perspective éclatée du dispositif de commande représenté à la figure 1 ;
- la figure 3 est une vue de face, suivant la flèche 3 de la figure 2, d'aimants formant des moyens de commutation électrique ;
- la figure 4 est une vue en coupe du dispositif de commande, suivant la ligne 4-4 de la figure 5 ;
- les figures 5 à 7 sont des vues en coupe du dispositif de commande, suivant, respectivement, les lignes 5-5, 6-6 et 7-7 de la figure 4 ;
- la figure 8 et une vue en perspective de moyens d'indexation du dispositif de commande représenté sur les figures précédentes ;
- la figure 9 est une vue en coupe du dispositif de commande, suivant la ligne 9-9 de la figure 4.

Dans ce qui suit les orientations avant, arrière, supérieure et inférieure sont considérées par rapport aux orientations habituelles d'un conducteur du véhicule. Par ailleurs, un organe est dit « proximal » lorsqu'il est proche de la main d'un conducteur actionnant le dispositif de commande selon l'invention et « distal » lorsque cet organe est éloigné de cette main.

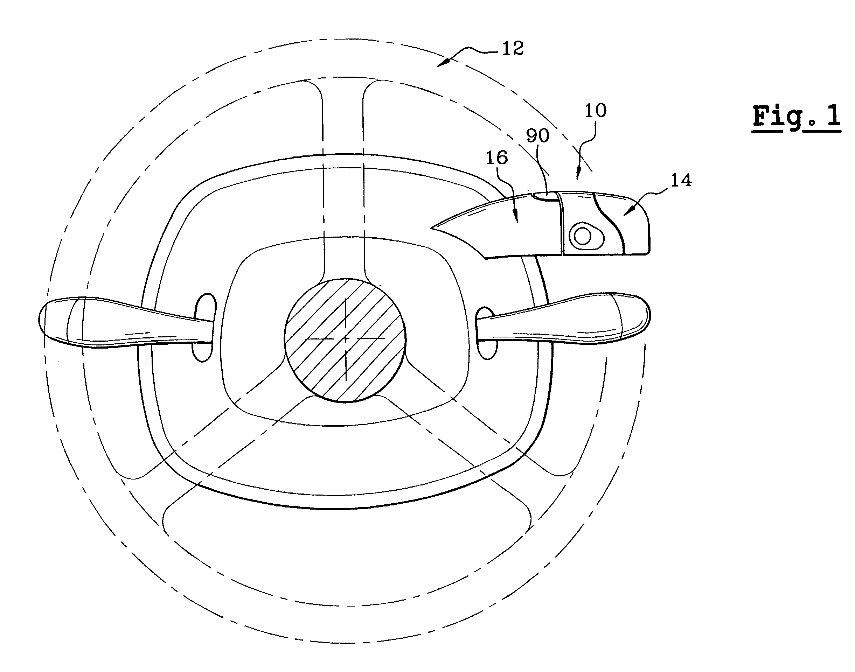

On a représenté sur la figure 1 un dispositif de commande selon l'invention, désigné par la référence générale 10. Ce dispositif 10 est destiné à commander une boîte de vitesses automatique de véhicule automobile.

Le dispositif 10 est agencé de préférence sur l'extrémité supérieure d'un corps de colonne de direction, à proximité d'un volant 12 de direction (représenté en traits mixtes sur la figure 1), de façon à être facilement accessible par les doigts du conducteur appuyant ses mains sur le volant 12. Dans l'exemple illustré sur la figure 1, le dispositif de commande 10 s'étend, par rapport au conducteur, devant le volant, sensiblement à droite de ce dernier.

Le dispositif 10 comprend un sélecteur 14 mobile articulé sur un support principal fixe 16 formant boîtier.

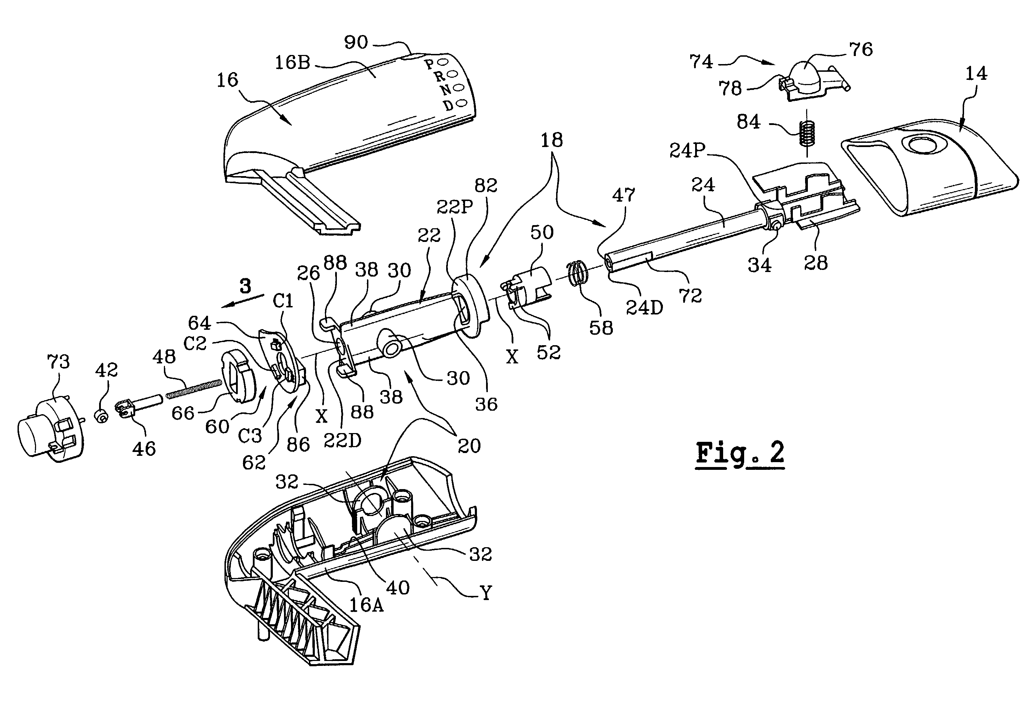

En se référant notamment à la figure 2, on voit que le sélecteur 14 a une forme générale de coque et que le support principal 16 comprend deux demi-coquilles 16A, 16B dans lesquelles sont logés des premiers 18 et seconds 20 moyens de guidage du sélecteur 14.

Les premiers moyens 18 de guidage imposent un mouvement de rotation du sélecteur 14 autour d'un premier axe géométrique, appelé axe de rotation X. Ce mouvement de rotation permet de sélectionner une configuration de fonctionnement de la boîte de vitesses. Ainsi, dans l'exemple illustré, le sélecteur 14 peut être placé, par rotation autour de l'axe X, dans quatre positions différentes correspondant aux configurations suivantes de fonctionnement de la boîte de vitesses :
- position « P » : véhicule en stationnement ;
- position « R » : marche arrière ;
- position « N » : point mort ;
- position « D » : roulage en marche avant.

Les seconds moyens de guidage 20 imposent un mouvement de basculement du sélecteur autour d'un second axe géométrique, appelé axe de basculement Y. Cet axe Y est sensiblement perpendiculaire à l'axe de rotation X. Le mouvement de basculement permet de changer un rapport de vitesse. Ainsi, le sélecteur 14 peut-être placé, par basculement autour de l'axe Y, dans trois positions différentes dites de repos, de passage un rapport supérieur et de passage à un rapport inférieur. La position de repos est intermédiaire entre les positions de passage à un rapport supérieur et de passage à un rapport inférieur.

On notera que dans le dispositif de commande 10 agencé comme cela est illustré sur la figure 1, l'axe Y est sensiblement vertical, le changement de rapport s'effectuant en faisant basculer le sélecteur 14 vers l'avant ou vers l'arrière.

Les premiers 18 et seconds 20 moyens de guidage comprennent un organe commun, formant une bascule 22, reliée, d'une part, au sélecteur 14, par une liaison de type pivot matérialisant l'axe de rotation X et, d'autre part, au support principal 16 par une liaison de type pivot matérialisant l'axe de basculement Y.

Les premiers moyens de guidage 18 comprennent un arbre de rotation 24, muni d'une extrémité proximale 24P solidaire du sélecteur 14, monté rotatif dans un logement 26, ménagé dans la bascule 22, formant un palier mobile matérialisant l'axe de rotation X. L'arbre 24 comporte une extrémité proximale 24P munie de moyens de liaison classiques 28 emboîtés dans le sélecteur 14 de façon à solidariser ce dernier en rotation avec l'arbre 24.

Les seconds moyens de guidage 20 comprenant une paire de tourillons 30, solidaires de la bascule 22, portés par une paire de flasques 32, solidaires d'une demi-coquille 16A du support 16, formant deux paliers fixes matérialisant l'axe de basculement Y.

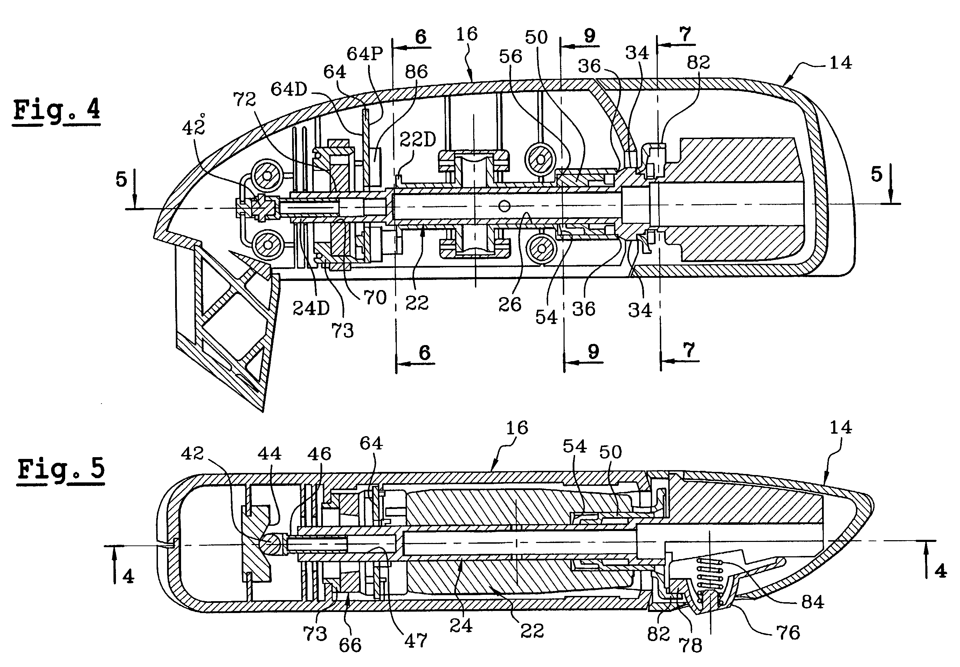

L'arbre de rotation 24 est relié à la bascule 22 par une paire de doigts radiaux 34, emboîtés dans une paire correspondante de lumières 36 incurvées autour de l'axe X, ménagées dans la bascule 22 (voir figures 2 et 4). Ces doigts 34 et lumières 36 forment des moyens complémentaires, d'une part, d'immobilisation axiale (parallèlement à l'axe de rotation X) de l'arbre de rotation 24 par rapport à la bascule 22 et, d'autre part, de limitation de la course angulaire de rotation de l'arbre 24 par rapport à la bascule 22. La course angulaire de rotation de l'arbre 24 est par exemple limitée à 90°.

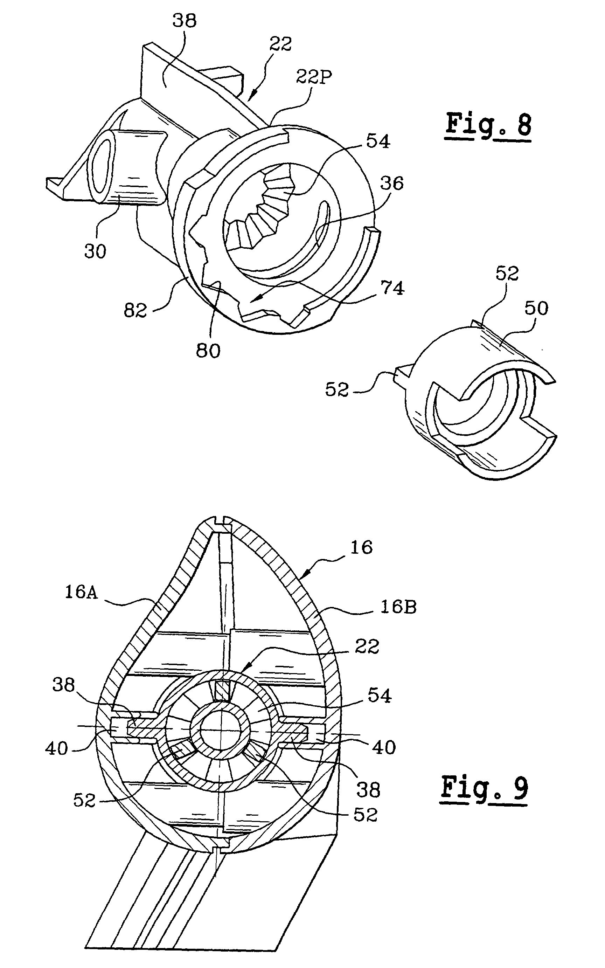

Par ailleurs, la bascule 22 est munie d'une paire d'ailes 38 sensiblement perpendiculaires à l'axe de basculement Y, destinées à coopérer par emboîtement avec des rails creux de guidage 40 ménagés dans les demi-coquilles 16A, 16B (voir notamment figures 2 et 9). Ces ailes 38 et rails 40 forment des moyens complémentaires d'immobilisation axiale (parallèlement à l'axe de basculement Y) de la bascule 22 par rapport au support principal 16. De préférence, les ailes 38 et rails 40 sont munis de butées complémentaires de limitation de la course angulaire de basculement de la bascule 22 par rapport au support principal 16.

Selon une variante simplifiée, il est possible de prévoir, d'une part, un seul doigt radial 34 coopérant avec une lumière 36 et, d'autre part, une seule aile 38 coopérant avec un rail 40.

Le dispositif de commande 10 comprend des moyens de rappel élastique du sélecteur 14 de sa position de passage à un rapport supérieur ou inférieur vers sa position de repos. Dans l'exemple illustré (voir notamment figures 2 et 5), les moyens de rappel élastique comprennent un galet 42, solidaire du mouvement de basculement du sélecteur 14, sollicité élastiquement contre une piste de rappel 44, solidaire du support principal 16, délimitée par deux rampes opposées disposées en « V ». Le galet 42 est porté par une chape 46 montée coulissante axialement dans un perçage axial 47 ménagé dans une extrémité distale 24D de l'arbre de rotation. La chape 46 est rappelée élastiquement, par un ressort 48 logé dans le perçage axial 47, vers une position de coopération du galet 42 avec la piste de rappel 44.

Le dispositif de commande 10 comprend également des moyens d'indexation de la position du sélecteur 14 autour de l'axe de rotation X. Dans l'exemple illustré (notamment sur les figures 2, 4, 8 et 9), les moyens d'indexation comprennent une bague 50, montée coulissante axialement sur l'arbre de rotation 24, munie d'au moins un ergot axial, de préférence trois ergots axiaux 52 comme cela est illustré. Les ergots axiaux 52 sont destinés à coopérer avec une couronne crantée 54, ou au moins une portion de couronne crantée, ménagée dans un épaulement 56 du logement 26 de la bascule.

La bague 50 est rappelée élastiquement vers la couronne crantée 54 par un ressort 58 intercalé axialement entre cette bague 50 et les doigts 34.

Le dispositif de commande 10 comprend des premiers moyens de commutation électrique 60 actionnés par le mouvement de rotation du sélecteur 14 autour de l'axe X. Ces premiers moyens de commutation 60 sont susceptibles d'adopter quatre états, dits états de commutation en rotation, correspondant aux quatre configurations de fonctionnement de la boîte de vitesses associées respectivement aux quatre positions P, R, N et D du sélecteur 14.

Le dispositif de commande 10 comprend également des seconds moyens de commutation électrique 62 actionnés par le mouvement de basculement du sélecteur 14 autour de l'axe Y. Ces seconds moyens de commutation 60 sont susceptibles d'adopter trois états, dits états de commutation en basculement, correspondant aux trois positions du sélecteur 14 dites de repos, de passage à un rapport supérieur et de passage à un rapport inférieur.

Comme cela apparaîtra plus clairement par la suite, les premiers 60 et seconds 62 moyens de commutation électrique comprennent des moyens complémentaires agencés sur :
- une extrémité distale 22D de la bascule,
- l'extrémité distale 24D de l'arbre de rotation, et
- un circuit imprimé 64 comportant deux faces opposées proximale 64P et distale 64D.

Le circuit imprimé 64 forme un support secondaire fixe porté par le support principal 16.

On notera, en considérant notamment les figures 4 et 5, que l'extrémité distale 24D de l'arbre de rotation fait saillie à travers l'extrémité distale 22D de la bascule et que le circuit imprimé 64 est traversé par l'arbre de rotation 24 de façon à être intercalé axialement entre l'extrémité distale 24D de l'arbre de rotation et l'extrémité distale 22D de la bascule.

Les premiers moyens de commutation 60 comprennent au moins deux capteurs, de préférence trois capteurs C1 à C3, portés par la face distale 64D du circuit imprimé, et des moyens d'influence de ces capteurs portés par l'extrémité distale 24D de l'arbre de rotation.

Chaque capteur C1 à C3 est susceptible d'adopter deux états différents dits « actif » et « de repos ». Dans l'exemple décrit, les capteurs C1 à C3 sont de type classique à effet Hall et les moyens d'influence de ces capteurs comprennent une source d'au moins un champs magnétique. Les capteurs de type à effet Hall ont pour avantage notamment d'être très peu encombrants.

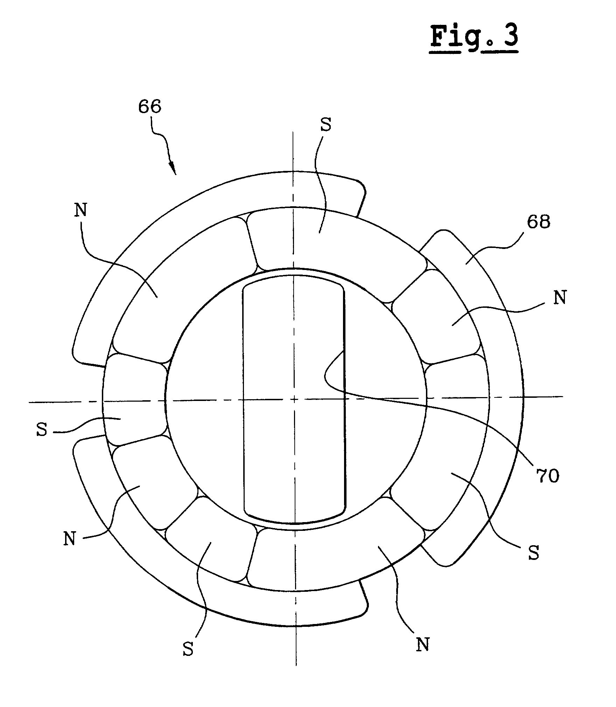

La source de champs magnétique est constituée par un ensemble 66 à aimants illustré notamment sur les figures 2 et 3. Cet ensemble 66 à aimants comprend un porte-aimants 68 couplé en rotation avec l'extrémité distale 24D de l'arbre de rotation au moyen d'une fente transversale 70, ménagée dans le porte-aimant 68, coopérant avec un double méplat 72, ménagé sur l'extrémité distale 24D de l'arbre de rotation. La fente de couplage 70 autorise le mouvement de basculement de l'arbre 24 autour de l'axe Y.

Le porte-aimants 68 est monté mobile dans un organe fixe 73 qui le guide en rotation autour d'un axe géométrique coïncidant avec l'axe X lorsque la bascule 22 est en position de repos telle qu'illustrée notamment sur la figure 5. Le porte-aimants 68 forme ainsi un support d'aimants déplaçable suivant une trajectoire circulaire par rapport à la surface distale 64D du circuit imprimé fixe portant les capteurs C1 à C3.

Les capteurs C1 à C3 sont répartis en cercle sensiblement coaxialement à cette trajectoire circulaire. Par ailleurs, le porte-aimants 68 porte huit aimants, de polarités opposées, répartis en cercle sensiblement coaxialement à son axe de rotation. On notera que les aimants sont répartis angulairement de façon à alterner leurs polarités N, S. Les aimants ont chacun une forme générale de secteur angulaire de grande ou petite dimension, un aimant de grande dimension ayant une dimension angulaire sensiblement deux fois supérieure à celle d'un aimant de petite dimension.

La position relative d'un aimant N, S par rapport à un capteur C1 à C3 influence l'état de ce capteur. Le déplacement relatif de l'ensemble 66 à aimants par rapport à la face distale 64D du circuit imprimé, portant les capteurs C1 à C3, provoque des changements d'état de ces capteurs C1 à C3 et donc des premiers moyens de commutation 60.

En choisissant des premier C1 et deuxième C2 capteurs quelconques parmi les trois capteurs, il est possible d'identifier les quatre états de commutation en rotation P, R, N, D par autant de combinaisons différentes des états de ces premier C1 et deuxième C2 capteurs.

L'utilisation du troisième capteur C3 permet d'identifier un même état de commutation en rotation par des combinaisons redondantes. Ainsi, les capteurs C1 à C3 pris deux à deux étant susceptibles d'adopter autant de combinaisons d'états de capteur que d'états de commutation en rotation P, R, N, D, chaque état de commutation en rotation P, R, N, D est identifié par :
- une combinaison d'états des deux capteurs C1, C2 ou
- une combinaison d'états des deux capteurs C1, C3 ou
- une combinaison d'états des deux capteurs C2, C3,
conformément au tableau suivant dans lequel un bit nul « 0 » est associé à l'état de repos d'un capteur et un bit unité « 1 » est associé à l'état actif de ce capteur.

| | P | R | N | D |
|---|---|---|---|---|
| C1 | **0** | **0** | **1** | **1** |
| C2 | **0** | **1** | **1** | **0** |
| C3 | **0** | **1** | **0** | **1** |

En considérant le tableau ci-dessus, on constate que chaque état de commutation en rotation P, R, N, D peut être identifié par au moins une combinaison d'états de deux capteurs choisis parmi les trois capteurs C1 à C3. Par conséquent, en cas de panne de l'un des capteurs, les deux autres capteurs suffisent pour identifier chaque état de commutation en rotation P, R, N, D.

Dans certains cas, le passage d'un premier état de commutation à un second état de commutation est caractérisé par le changement d'état de deux bits. C'est le cas par exemple, du passage de l'état de commutation « P » défini par C2 = 0 et C3 = 0 à l'état de commutation « R » défini par C2 = 1 et C3 = 1. Au cours de ce passage, les changements d'état des bits pourraient ne pas être simultanés créant ainsi fortuitement une combinaison de bits interprétée inopinément comme définissant un état stable P, R, N ou D des moyens de commutation 60. Ainsi, en reprenant l'exemple ci-dessus, le passage de l'état de commutation « P » défini par C2 = 0 et C3 = 0 à l'état de commutation « R » défini par C2 = 1 et C3 = 1 pourrait conduire à la combinaison intermédiaire fortuite C2 = 1, C3 = 0 ou bien C2 = 0, C3 = 1, cette combinaison fortuite risquant d'être malencontreusement identifiée à l'état de commutation stable « N » ou « D » des premiers moyens de commutation 60.

Pour éviter qu'un état intermédiaire des premiers moyens de commutation 60 (entre P et R, entre R et N ou entre N et D) conduise fortuitement à une combinaison de bits correspondant à un état stable P, R, N, D de ces moyens de commutation 60, les moyens d'indexation 50, 54 de la position du sélecteur 14 autour de l'axe de rotation X rendent instables mécaniquement ces états intermédiaires. Ainsi, lors d'un changement d'état des premiers moyens de commutation 60, on évite toute confusion entre un état intermédiaire (fortuit) des premiers moyens de commutation 60 et un état stable valablement identifié de ces moyens de commutation 60.

En variante, les capteurs du type à effet Hall pourraient être remplacés par des capteurs d'un autre type, notamment de type optique.

On notera que du fait de l'utilisation de capteurs C1 à C3 associés à des moyens d'influence de capteur, les manoeuvres des premiers moyens de commutation 60 n'entraînent aucun frottement de contacts électriques, ce qui élimine les inconvénients liés à l'usure des contacts électriques frottants, tant en ce qui concerne la présence indésirable de poussières d'usure que la fragilisation des pièces en contact.

Un autre avantage résultant de l'utilisation des capteurs C1 à C3 est la suppression du risque que les premiers moyens de commutation, mal positionnés, atteignent une position intermédiaire dans laquelle il n'assurent pas une fermeture ou une ouverture franche d'un circuit électrique.

Le dispositif de commande 10 comprend des moyens libérables 74 de verrouillage du sélecteur 14, illustrés notamment sur les figures 2, 7 et 8, interdisant certains passages entre les états de commutation en rotation des premiers moyens de commutation 60.

Dans l'exemple illustré, les moyens de verrouillage 74 comprennent un bouton 76 de libération de ces moyens de verrouillage porté par le sélecteur 14. Un doigt, formant un pêne escamotable 78, est relié au bouton 76. Ce pêne 78 est destiné à coopérer avec une gâche 80, ménagée dans une collerette 82 délimitant une extrémité proximale 22P de la bascule.

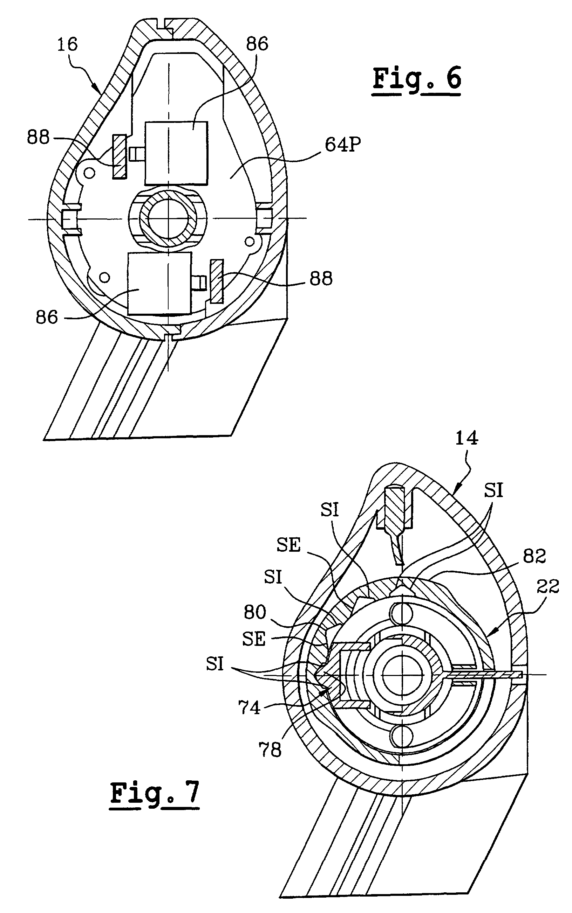

Le bouton 76 est déplaçable entre une position de verrouillage (voir figure 7), vers laquelle il est sollicité élastiquement par un ressort 84, et une position de déverrouillage.

La gâche 80 comprend un profil évolutif, destiné à coopérer avec le pêne 78, délimité par des butées SI d'immobilisation de ce pêne et des rampes SE d'escamotage de ce pêne 78 (voir figures 7 et 8).

Les surfaces d'immobilisation SI et les rampes d'escamotage SE sont réparties de façon à autoriser ou interdire les passages suivants entre états de commutation en rotation.
Passage P → R : interdit, le pêne 78 coopérant avec une butée SI ;
Passage R → N : autorisé, le pêne 78 coopérant avec une rampe SE ;
Passage N → D : autorisé, le pêne 78 coopérant avec une rampe SE ;
Passage D → N : interdit, le pêne 78 coopérant avec une butée SI ;
Passage N → R : interdit, le pêne 78 coopérant avec une butée SI ;
Passage R → P : interdit, le pêne 78 coopérant avec une butée SI.

En se référant notamment aux figures 2 et 6, on voit que les seconds moyens de commutation électrique 62 comprennent deux contacteurs 86 à poussoir portés par une face proximale 64P du circuit imprimé. Ces contacteurs 86 sont actionnés chacun par une patte 88 correspondante prolongeant l'extrémité distale 22D de la bascule. Les deux contacteurs 86 pilotent les passages aux rapports supérieur et inférieur respectivement.

En variante, les seconds moyens de commutation électrique 62 pourraient ne comprendre qu'un seul contacteur, par exemple à double poussoir.

De préférence, le sélecteur 14 et le support 16 sont délimités par des surfaces complémentaires n'autorisant le basculement du sélecteur 14 que lorsque ce dernier est dans la position D, c'est-à-dire dans la position illustrée sur les figures 4 et 5. Par ailleurs, le dispositif de commande 10 comprend un bouton 90 de sélection du fonctionnement automatique ou manuel de la boîte de vitesse. Ce bouton de sélection 90 est porté par exemple par le support principal 16, comme cela est représenté sur la figure 1. L'activation des seconds moyens de commutation 62 est inhibée tant que le bouton de sélection 90 n'est pas dans son état de sélection du fonctionnement manuel de la boîte de vitesses.

On décrira ci-dessous certains aspects du fonctionnement du dispositif de commande 10 liés plus spécialement à l'invention.

Pour changer la position en rotation du sélecteur 14, par exemple passer de la position N « point mort » à la position D « roulage en marche avant », le conducteur tourne le sélecteur autour de l'axe X. Il n'est pas nécessaire de déverrouiller le sélecteur 14 pour passer de la position N « point mort » à la position D « roulage en marche avant ». En effet, le pêne 78 est escamoté par coopération avec une rampe SE. Par contre, il est impossible au conducteur de tourner le sélecteur 14 en sens inverse, c'est-à-dire de passer de la position D à la position N, sans déverrouiller le pêne 78, du fait de la coopération du pêne 78 avec une butée SI de la gâche 80. Par conséquent, pour passer de la position D à la position N, le conducteur doit appuyer sur le bouton 76, à l'encontre de la force de rappel du ressort 84, de façon à libérer le pêne 78 de la butée SI.

La rotation du sélecteur 14 autour de l'axe X provoque un mouvement relatif des aimants N, S par rapport aux capteurs C1 à C3, en modifiant ainsi l'état de ces capteurs et des premiers moyens de commutation 60.

Lorsque le sélecteur 14 est dans la position D « roulage en marche avant », le conducteur peut, le cas échéant, sélectionner un fonctionnement manuel de la boîte de vitesses en appuyant sur le bouton de sélection 90. Le conducteur change alors de rapport en faisant basculer le sélecteur 14 autour de l'axe Y, vers l'avant ou l'arrière du véhicule. Ce mouvement de basculement a pour effet de mettre en contact l'une ou l'autre des pattes 88 avec le poussoir de l'un ou l'autre des contacteurs 86 et ainsi de modifier l'état des seconds moyens de commutation 60. Le galet 42 rappelle le sélecteur 14 en position de repos dès que le conducteur relâche ce sélecteur.

Parmi les avantages de l'invention, on notera que celle-ci permet de déplacer le sélecteur selon deux mouvements distincts pour, respectivement, la sélection d'une configuration de fonctionnement de la boîte de vitesses et le passage d'un rapport. Le dispositif de commande selon l'invention est de ce fait peu encombrant et adapté pour être agencé sur un corps de colonne de direction, à proximité du volant.

## Revendications

1. Dispositif de commande pour boîte de vitesses automatique de véhicule automobile, du type comprenant :
- un sélecteur (14), articulé sur un support principal (16),
- des premiers (18) moyens de guidage du sélecteur (14) selon un premier mouvement de rotation du sélecteur (14) autour d'un axe géométrique de rotation (X), pour la sélection d'une configuration de fonctionnement de la boîte de vitesses, les premiers moyens de guidage (18) comprenant un arbre de rotation (24) monté rotatif dans un logement (26), ménagé dans la bascule (22), formant un palier mobile matérialisant une liaison de type pivot d'axe de rotation (X), cet arbre étant muni d'une extrémité proximale (24P) solidaire du sélecteur (14),
- des seconds (20) moyens de guidage du sélecteur (14) selon un second mouvement de basculement du sélecteur (14) autour d'un axe géométrique de basculement (Y), sensiblement perpendiculaire à l'axe de rotation (X), pour le changement de rapport,
**caractérisé en ce que** la bascule (22) est commune aux premiers et seconds moyens de guidage (20) et est reliée au support principal (16) par une liaison de type pivot matérialisant l'axe de basculement (Y), l'arbre de rotation (24) étant muni d'une extrémité distale (24D) portant des moyens (42) de rappel élastique de la bascule (22) autour de l'axe de basculement (Y) vers une position de repos du sélecteur (14).

2. Dispositif selon la revendication 1, **caractérisé en ce que** les seconds moyens de guidage (20) comprennent des tourillons (30), solidaires de la bascule (22), portés par des flasques (32), solidaires du support principal (16), formant des paliers fixes matérialisant l'axe de basculement (Y).

3. Dispositif selon la revendication 1 ou 2, **caractérisé en ce qu'**il comprend des premiers (60) et seconds (62) moyens de commutation électrique actionnés par les déplacements du sélecteur (14) selon ses premier et second mouvements, respectivement, les premiers moyens de commutation électrique (60) étant susceptibles d'adopter différents états correspondant à différentes configurations de fonctionnement de la boîte de vitesses, les seconds moyens de commutation électrique (62) étant susceptibles d'adopter trois états correspondant à trois positions du sélecteur (14) à savoir, la position de repos et deux autres positions respectivement de passage à un rapport supérieur et de passage à un rapport inférieur.

4. Dispositif selon les revendications 2 et 3 prises ensemble, **caractérisé en ce que** les premiers (60) et seconds (62) moyens de commutation électrique comprennent des moyens complémentaires (66, C1 à C3, 86, 88) liés à :
- une extrémité distale (22D) de la bascule (22),
- une extrémité distale (24D) de l'arbre de rotation faisant saillie à travers l'extrémité distale (22D) de la bascule (22), et
- un support secondaire (64), porté par le support principal (16), traversé par l'arbre de rotation (24), intercalé axialement entre l'extrémité distale (24D) de l'arbre de rotation et l'extrémité distale (22D) de la bascule (22).

5. Dispositif selon la revendication 4, **caractérisé en ce que** le support secondaire (64) est un circuit imprimé, les premiers moyens de commutation électrique (60) comprenant au moins un capteur (C1 à C3), de préférence à effet Hall, porté par une face distale (64D) de ce circuit imprimé, et des moyens (66) d'influence du capteur (C1 à C3), comportant de préférence au moins un aimant (N, S), portés par l'extrémité distale (24D) de l'arbre de rotation.

6. Dispositif selon la revendication 5, **caractérisé en ce que** les seconds moyens de commutation électrique (62) comprennent au moins un contacteur (86) à poussoir porté par une face proximale (P) du circuit imprimé, et un organe (88) d'actionnement du poussoir porté par l'extrémité distale (22D) de la bascule (22).

7. Dispositif selon l'une quelconque des revendications 3 à 6, **caractérisé en ce qu'**il comprend des moyens (50 à 54) d'indexation de la position du sélecteur (14) autour de l'axe de rotation (X).

8. Dispositif selon la revendication 7, **caractérisé en ce que** les moyens d'indexation comprennent une bague (50), montée coulissante axialement sur l'arbre de rotation (24), munie d'au moins un ergot axial (52) destiné à coopérer avec au moins une portion de couronne crantée (54) solidaire de la bascule (22), la bague (50) étant rappelée élastiquement vers la portion de couronne crantée.

9. Dispositif selon l'une quelconque des revendications 3 à 8, **caractérisé en ce qu'**il comprend des moyens libérables (74) de verrouillage du sélecteur (14) interdisant le passage entre au moins deux états des premiers moyens de commutation électrique (60).

10. Dispositif selon la revendication 9, **caractérisé en ce que** les moyens (74) de verrouillage du sélecteur (14) comprennent un doigt, formant un pêne escamotable (78), destiné à coopérer avec une gâche (80), solidaire de la bascule (22).

11. Dispositif selon la revendication 10, **caractérisé en ce que** la gâche (80) comprend un profil évolutif, destiné à coopérer avec le pêne (78), délimité par des butées (SI) d'immobilisation de ce pêne et des rampes (SE) d'escamotage de ce pêne.

12. Dispositif selon la revendication 10 ou 11, **caractérisé en ce que** le pêne (78) est solidaire d'un bouton (76) de libération des moyens de verrouillage (74) porté par le sélecteur (14), ce bouton (76) étant déplaçable entre une position de verrouillage, vers laquelle il est sollicité élastiquement, et une position de déverrouillage.

13. Dispositif selon l'une quelconque des revendications 3 à 12, **caractérisé en ce que** les moyens (42, 44, 48) de rappel élastique du sélecteur (14) sollicitent ce sélecteur (14) de sa position de passage à un rapport supérieur ou inférieur vers sa position de repos.

14. Dispositif selon la revendication 13, **caractérisé en ce que** les moyens de rappel élastique comprennent un galet (42), porté par l'extrémité distale (26D) de l'arbre de rotation (24), sollicité élastiquement contre une piste de rappel (44), solidaire du support principal (16), délimitée par deux rampes opposées disposées en « V ».

15. Dispositif selon la revendication 14, **caractérisé en ce que** le galet (42) est porté par une chape (46) montée coulissante axialement sur une extrémité (26D) de l'arbre de rotation.

## Patentansprüche

1. Steuervorrichtung für ein Automatikgetriebe eines Kraftfahrzeugs, umfassend:
- eine Auswahlvorrichtung (14), die auf einem Hauptträger (16) angelenkt ist,
- erste (18) Führungsmittel für die Auswahlvorrichtung (14) gemäß einer ersten Drehbewegung der Auswahlvorrichtung (14) um eine geometrische Drehachse (X) für die Auswahl einer Betriebskonfiguration des Getriebes, wobei die ersten Führungsmittel (18) eine Drehwelle (24) umfassen, die drehbar in einer Lagerung (26) befestigt ist, die in der Kippvorrichtung (22) vorgesehen ist und ein bewegliches Lager bildet, das eine Verbindung vom Typ Drehachsenzapfen (X) darstellt, wobei diese Welle mit einem proximalen Ende (24P) versehen ist, das fest mit der Auswahlvorrichtung (14) verbunden ist,
- zweite (20) Führungsmittel für die Auswahlvorrichtung (14) gemäß einer zweiten Kippbewegung der Auswahlvorrichtung (14) um eine geometrische Kippachse (Y), die im Wesentlichen auf die Drehachse (X) senkrecht steht, um den Gang zu wechseln,
**dadurch gekennzeichnet, dass** die Kippvorrichtung (22) den ersten und zweiten Führungsmittel (20) gemein ist und mit dem Hauptträger (16) durch eine Verbindung vom Typ Zapfen, der die Kippachse (Y) darstellt, verbunden ist, wobei die Drehwelle (24) mit einem distalen Ende (24D) versehen ist, das elastische Rückstellmittel (42) für die Kippschaltung (22) um die Kippachse (Y) in eine Ruheposition der Auswahlvorrichtung (14) trägt.

2. Vorrichtung nach Anspruch 1, **dadurch gekennzeichnet, dass** die zweiten Führungsmittel (20) Drehzapfen (30) umfassen, die mit der Kippvorrichtung (22) verbunden sind und von Flanschen (32) getragen werden, die mit dem Hauptträger (16) verbunden sind und feste Lager bilden, die die Kippachse (Y) darstellen.

3. Vorrichtung nach Anspruch 1 oder 2, **dadurch gekennzeichnet, dass** sie erste (60) und zweite (62) elektrische Schaltmittel umfasst, die durch die Verschiebungen der Auswahlvorrichtung (14) gemäß ihrer ersten bzw. zweiten Bewegung betätigt werden, wobei die ersten elektrischen Schaltmittel (60) verschiedene Zustände einnehmen können, die verschiedenen Betriebskonfigurationen des Getriebes entsprechen, wobei die zweiten elektrischen Schaltmittel (62) drei Zustände einnehmen können, die drei Positionen der Auswahlvorrichtung (14) entsprechen, nämlich der Ruheposition und zwei weiteren Positionen des Übergangs in einen höheren Gang bzw. in einen niedrigeren Gang.

4. Vorrichtung nach den Ansprüchen 2 und 3 gemeinsam, **dadurch gekennzeichnet, dass** die ersten (60) und zweiten (62) elektrischen Schaltmittel ergänzende Mittel (66, C1 bis C3, 86, 88) umfassen, die verbunden sind mit:
- einem distalen Ende (22D) der Kippvorrichtung (22),
- einem distalen Ende (24D) der Drehwelle, die über das distale Ende (22D) der Kippvorrichtung (22) überragt, und
- einem Nebenträger (64), der von dem Hauptträger (16) getragen wird, durch den hindurch die Drehwelle (24) verläuft und der axial zwischen dem distalen Ende (24D) der Drehwelle und dem distalen Ende (22D) der Kippvorrichtung (22) angeordnet ist.

5. Vorrichtung nach Anspruch 4, **dadurch gekennzeichnet, dass** der Nebenträger (64) eine gedruckte Schaltung ist, wobei die ersten elektrischen Schaltmittel (60) mindestens einen Sensor (C1 bis C3), vorzugsweise mit Halleffekt, der von einer distalen Seite (64D) dieser gedruckten Schaltung getragen wird, und Mittel (66) zur Beeinflussung des Sensors (C1 bis C3) umfassen, die vorzugsweise einen Magneten (N, S) umfassen und von dem distalen Ende (24D) der Drehwelle getragen werden.

6. Vorrichtung nach Anspruch 5, **dadurch gekennzeichnet, dass** die zweiten elektrischen Schaltmittel (62) mindestens ein Schütz (86) mit Schieber, der von einer proximalen Seite (P) der gedruckten Schaltung getragen wird, und ein Element (88) zur Betätigung des Schiebers umfassen, das vom distalen Ende (22D) der Kippvorrichtung (22) getragen wird.

7. Vorrichtung nach einem der Ansprüche 3 bis 6, **dadurch gekennzeichnet, dass** sie Mittel (50 bis 54) zur Anzeichnung der Position der Auswahlvorrichtung (14) um die Drehachse (X) umfasst.

8. Vorrichtung nach Anspruch 7, **dadurch gekennzeichnet, dass** die Anzeichnungsmittel einen Ring (50) umfassen, der axial gleitend auf der Drehwelle (24) angeordnet und mit mindestens einem Axialhaken (52) versehen ist, der dazu bestimmt ist, mit mindestens einem Abschnitt eines Zahnkranzes (54) zusammenzuwirken, der mit der Kippvorrichtung (22) verbunden ist, wobei der Ring (50) elastisch zu dem Zahnkranzabschnitt zurückgestellt wird.

9. Vorrichtung nach einem der Ansprüche 3 bis 8, **dadurch gekennzeichnet, dass** sie freigebbare Mittel (74) zur Verriegelung der Auswahlvorrichtung (14) umfasst, die den Übergang zwischen mindestens zwei Zuständen der ersten elektrischen Schaltmittel (60) verhindern.

10. Vorrichtung nach Anspruch 9, **dadurch gekennzeichnet, dass** die Verriegelungsmittel (74) der Auswahlvorrichtung (14) einen Finger umfassen, der einen einziehbaren Riegel (78) bildet, der dazu bestimmt ist, mit einem mit der Kippvorrichtung (22) verbundenen Schließhaken (80) zusammenzuwirken.

11. Vorrichtung nach Anspruch 10, **dadurch gekennzeichnet, dass** der Schließhaken (80) ein erweiterbares Profil umfasst, das dazu bestimmt ist, mit dem Riegel (78) zusammenzuwirken und durch Anschläge (SI) zur Feststellung dieses Riegels und Einziehrampen (SE) dieses Riegels begrenzt ist.

12. Vorrichtung nach Anspruch 10 oder 11, **dadurch gekennzeichnet, dass** der Riegel (78) mit einem Knopf (76) zur Freigabe der Verriegelungsmittel (74) verbunden ist, der von der Auswahlvorrichtung (14) getragen wird, wobei dieser Knopf (76) zwischen einer Verriegelungsposition, in die er elastisch geschoben wird, und einer Entriegelungsposition verschiebbar ist.

13. Vorrichtung nach einem der Ansprüche 3 bis 12, **dadurch gekennzeichnet, dass** die Mittel (42, 11, 18) zur elastischen Rückstellung der Auswahlvorrichtung (14) diese Auswahlvorrichtung (14) von ihrer Position des Übergangs in einen höheren oder niedrigeren Gang in ihre Ruheposition schieben.

14. Vorrichtung nach Anspruch 13, **dadurch gekennzeichnet, dass** die elastischen Rückstellmittel eine Rolle (42) umfassen, die von dem distalen Ende (26D) der Drehwelle (24) getragen wird und elastisch gegen eine Rückstellspur (44) geschoben wird, die mit dem Hauptträger (16) verbunden ist und von zwei "V-förmig" angeordneten gegenüber liegenden Rampen begrenzt ist.

15. Vorrichtung nach Anspruch 14, **dadurch gekennzeichnet, dass** die Rolle (42) von einem Gehäuse (46) getragen wird, das axial gleitend an einem Ende (26D) der Drehwelle befestigt ist.

## Claims

1. A control device for an automatic gearbox of a motor vehicle, the device being of the type comprising:
. a selector (14) hinged to a main support (16);
. first guide means (18) for guiding the selector (14) in a rotary first movement of the selector (14) about an axis of rotation (X), to select an operating configuration of the gearbox, the first guide means (18) comprising a rotary shaft (24) mounted to rotate in a housing (26) provided in the rocker (22) forming a moving bearing defining a pivot type connection about the axis of rotation (X), said shaft being provided with a proximal end (24P) secured to the selector (14); and
. second guide means (20) for guiding the selector (14) in a tilting second movement of the selector (14) about a tilting axis (Y) that is substantially perpendicular to the axis of rotation (X) in order to change gear;
the device being **characterized in that** the rocker (22) is common to the first and second guide means (20) and is connected to the main support (16) via a pivot type connection defining the tilting axis (Y), the rotary shaft (24) being provided with a distal end (24D) carrying resilient return means (42) for returning the rocker (22) about the tilting axis (Y) towards a rest position for the selector (14).

2. A device according to claim 1, **characterized in that** the second guide means (20) include stub axles (30) secured to the rocker (22) and carried by side plates (32) secured to the main support (16), forming fixed bearings that define the tilting axis (Y).

3. A device according to claim 1 or claim 2, **characterized in that** it includes first and second electrical switch means (60, 62) actuated by the displacements of the selector (14) in its first and second movements, respectively, the first electrical switch means (60) being suitable for adopting different states corresponding to different operating configurations of the gearbox, the second electrical switch means (62) being suitable for adopting three states corresponding to three positions of the selector (14), namely the rest position and two other positions respectively for shifting up a gear and for shifting down a gear.

4. A device according to claims 2 and 3 taken together, **characterized in that** the first and second electrical switch means (60, 62) include additional means (66, C1 to C3, 86, 88) connected to:
. a distal end (22D) of the rocker (22);
. a distal end (24D) of the rotary shaft for projecting though the distal end (22D) of the rocker (22); and
. a secondary support (64) carried by the main support (16) and passing the rotary shaft (24) interposed axially between the distal end (24D) of the rotary shaft and the distal end (22D) of the rocker (22).

5. A device according to claim 4, **characterized in that** the secondary support (64) is a printed circuit, the first electrical switch means (60) comprising at least one sensor (C1 to C3), preferably a Hall effect sensor, carried by a distal face (64D) of the printed circuit, and means (66) for influencing the sensor (C1 to C3), preferably comprising at least one magnet (N, S) carried by the distal end (24D) of the rotary shaft.

6. A device according to claim 5, **characterized in that** the second electrical switch means (62) comprise at least one plunger contactor (86) carried by a proximal face (P) of the printed circuit, and a member (88) for actuating the plunger and carried by the distal end (22D) of the rocker (22).

7. A device according to any one of claims 3 to 6, **characterized in that** it includes indexing means (50 to 54) for indexing the position of the selector (14) about the axis of rotation (X).

8. A device according to claim 7, **characterized in that** the indexing means comprise a sliding ring (50) mounted to slide axially on the rotary shaft (24), and provided with at least one axial stud (52) for co-operating with at least a portion of a crenellated ring (54) secured to the rocker (22), the sliding ring (50) being urged resiliently towards the crenellated ring portion.

9. A device according to any one of claims 3 to 8, **characterized in that** it includes releasable selector-locking means (74) for preventing the first electrical switch means (60) from passing between at least two states.

10. A device according to claim 9, **characterized in that** the selector-locking means (74) comprise a finger forming a retractable bolt (78) for co-operating with a keeper (80) secured to the rocker (52).

11. A device according to claim 10, **characterized in that** the keeper (80) is of varying profile for co-operating with the bolt (78), the profile being defined by abutments (SI) for preventing the bolt from moving and ramps (SE) for retracting the bolt.

12. A device according to claim 10 or claim 11, **characterized in that** the bolt (78) is secured to a button (76) for releasing the locking means (74) carried by the selector (14), the button (76) being movable between a locking position, towards which it is biased resiliently, and an unlocking position.

13. A device according to any one of claims 3 to 12, **characterized in that** the resilient return means (42, 44, 48) of the selector (14) bias the selector (14) away from its shift-up position or shift-down position towards its rest position.

14. A device according to claim 13, **characterized in that** the resilient return means comprise a wheel (42) carried by the distal end (26D) of the rotary shaft (24) and biased resiliently against a return track (44) secured to the main support (16) and defined by two opposite ramps disposed in a V-configuration.

15. A device according to claim 14, **characterized in that** the wheel (42) is carried by a fork (46) mounted to slide axially at one end (26D) of the rotary shaft.
